# EUROPEAN PATENT SPECIFICATION

(11) **EP 1 377 160 B1**
(45) Date of publication and mention of the grant of the patent: **19.05.2010**
(21) Application number: 02705517.7
(22) Date of filing: 04.03.2002
(51) Int. Cl.: A01K 73/06

(54) **NET HAULING EQUIPMENT FOR FISHING VESSELS**
NETZEINHOLEINRICHTUNG FÜR FISCHEREIFAHRZEUGE
EQUIPEMENT DE REMONTEE DE FILET POUR BATEAUX DE PECHE

(30) Priority: 17.03.2001 KR 2001007324 U
(43) Date of publication of application: 07.01.2004
(73) Proprietor: Gumjoo Mariner Co., Ltd, Chungcheongnam-do 330-210 (KR)
(72) Inventor: KIM, Do-Nam, Gyeonggi-do 456-703 (KR)
(74) Representative: Zinnecker, Armin
(86) International application number: PCT/KR2002/000368
(87) International publication number: WO 2002/076197

(56) References cited:
- KR-U- 99 008 131
- KR-Y1- 130 967
- US-A- 4 347 680
- US-A- 4 415 140

## Description

### Technical field

The present invention relates to net hauling equipment for a fishing vessel and, more particularly, to net hauling equipment installed on a fishing vessel in order to haul at the fishing net easily.

### Background art

For conventional net hauling equipment for a fishing vessel, the inventor of the present invention has filed a Korean Utility Model application No. 1998-22755 relating net winding equipment for a fishing vessel, wherein net hauling equipment is installed around the bow of a fishing vessel in order to haul at the fishing net from the sea easily.

This prior art comprises first and second rollers which are separately installed on one drive shaft and are rotated simultaneously, and an auxiliary roller which is installed between the first and second rollers.

According to this prior art net hauling equipment, the net is wound around the first, second and auxiliary rollers, and then the first and the second rollers are rotated by rotating the drive shaft, in order to haul at the net easily. However, there is a problem that the net is not easily hauled at when the net is set in the deep sea or when the net is large and holds large amount of fish, because the contacting surface of the net and rollers is not sufficient considering the weight of the net.

Moreover, in this prior art net hauling equipment, the net is twisted along the twisted direction of the rope which fixes the net, making it difficult to haul at the net easily from the sea.

### Summary of the invention

The object of the present invention is to solve the problem of prior art and to provide net hauling equipment which can haul at the net easily. To this purpose, the net hauling equipment of the present invention uses a third roller and an auxiliary roller and increases the contact area of the net and the roller by making the net closely contact with the roller while hauling. By using the net hauling equipment of the present invention, the net is not twisted and can be hauled at easily.

According to one aspect of the present invention, the net hauling equipment comprises a turning apparatus which is installed on the bow of a fishing vessel and can turn horizontally, a drive shaft which is mounted on the frame installed on one end of the turning apparatus and is rotated by a motor, a plurality of rollers which are formed extending along the axis of the drive shaft and are partitioned by intermediate plates which are fixed on the frame, a plurality of auxiliary rollers installed slantwise at the lower end of the intermediate plates between the rollers, and two side plates which are installed on the both end sides of the rollers, with one end fixed on the frame.

According to another aspect of the present invention, the turning apparatus comprises a fixed flange fixed on the bow of a fishing vessel, and a turning flange which is installed on the upper surface of the fixed flange and can turn horizontally

According to still another aspect of the present invention, an auxiliary frame supporting the drive shaft is installed on the side plate installed on the roller, and a rotating roller is installed parallel to the side plate on the frame which is extended from the auxiliary frame,

According to yet another aspect of the present invention, the auxiliary frame supports the drive shaft at the center of the auxiliary frame, and radial ribs are secured at the side plate extending from center of the auxiliary frame in the radial direction.

In addition, rod-shaped rubber pad can be installed at the circumference of each roller.

### Brief description of drawings

Fig. 1 illustrates the turning apparatus of the present invention,
Fig. 2 is a front view of the net hauling equipment of the present invention,
Fig. 3 is a side view of the net hauling equipment of the present invention, and
Fig. 4 illustrates the state of hauling at a net by using the net hauling equipment of the present invention.

### Best mode for carrying out the invention

The best mode for carrying out the invention will be described with reference to the drawings.

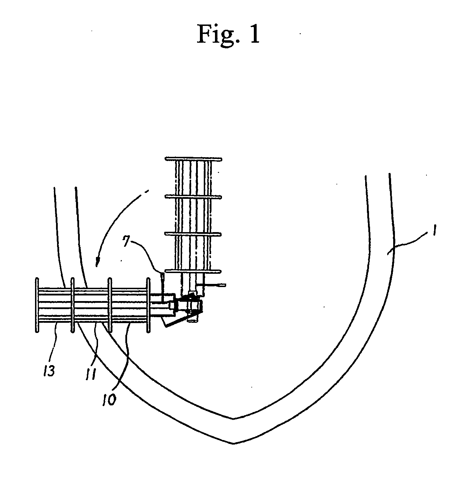

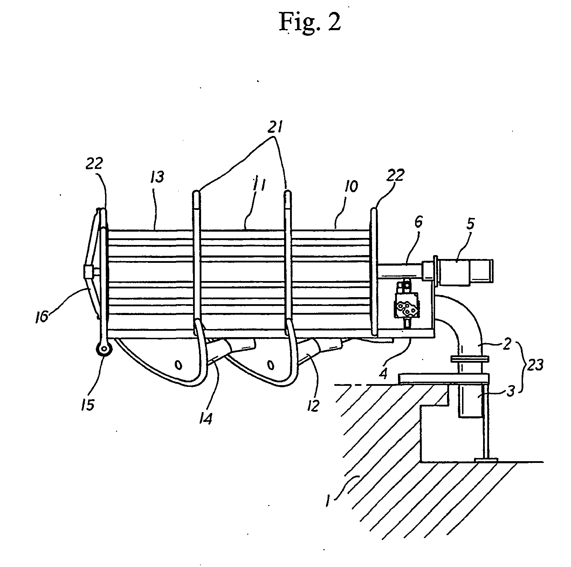

In the net hauling equipment of the present invention, as illustrated in Figs. 1 and 2, a turning apparatus 23 which can turn horizontally is installed around the bow of a fishing vessel 1. The turning apparatus comprises a fixed flange 3 which is fixed around the bow of the fishing vessel and a turning flange 2 which is installed on the upper surface of the fixing flange 3 and can be rotated. In is preferable that the turning flange 2 is bent at a fright angle.

As illustrated in Fig. 1, turning angle of the turning flange 2 can be variously adjusted by an actuator (not illustrated) which is operated by a lever 7 so that the work of hauling at the net can be easily done.

Also, a frame is fixed at one end of the turning flange 2, i.e., one end which faces the fixing flange 3, and a hydraulic motor 5 on which drive shaft is extended is installed on the frame 4.

On the drive shaft 6, a first roller 10, a second roller 11, and a third roller 13 are placed in this order, and are partitioned by the intermediate plates 21 one side of which is fixed at the frame 4 extending under the rollers. Also, a second auxiliary roller 12 is installed slantwise at one side of the bottom of the intermediate plate 21 between the first roller 10 and the second roller 11, and a first auxiliary roller is installed slantwise at one side of the bottom of the intermediate plate 21 between the second roller 11 and the third roller 13.

Side plates 22 one side of which is fixed at the frame 4 extending under the rollers are installed respectively inside the first roller 10 and outside the third roller 13, while the side plates 22 and the intermediate plates 21 minimizing the effect of the wind against the net by protecting the extruded portions.

On circumferences of each roller, a rubber pad 8, for example, rubber pad in the shape of a square rod is so combined as to be removable and can be replaced when worn out.

The first roller 10, the second roller 11 and the third roller 13 are so combined with the drive shaft 6 as to be rotated simultaneously with the drive shaft, but the side plates 22 and the intermediate plates 21 are not rotated with the drive shaft because these plates are fixed at the frame 4 which extends under the rollers 10, 11 and 13, and partition these rollers 10,11 and 13.

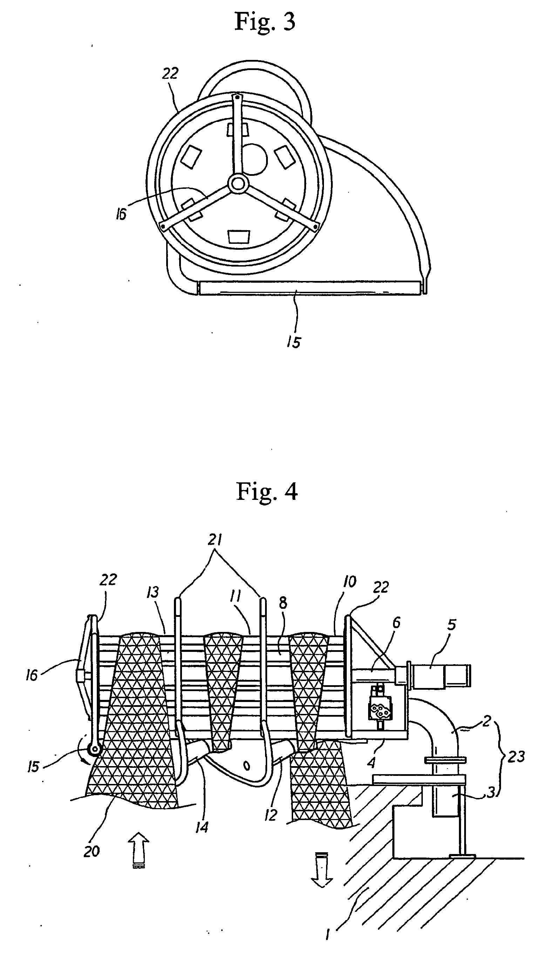

As illustrated in Fig. 3, an auxiliary frame 16 supporting one end of the drive shaft is installed at the side plate 22 which is installed at the back side of the third roller 13.

The auxiliary frame 16 includes radial ribs whose central portion is extruded outward, wherein one end of the drive shaft 16 is supported by this central portion, and each end section of the ribs is formed inwardly slanted and is fixed at the side plate 22.

At one side of the auxiliary frame 16, a frame is installed extending parallel to the side surface of the side plate 22 under the third roller 13, and a rotating roller 15 is installed at the extending frame parallel to the side plate 22.

Next, the process of hauling at a net by using the net hauling equipment of the present invention will be described with reference to the Fig. 4.

In order to haul at a net by using the net hauling equipment of the present invention, the net 20 is wound on the second auxiliary roller 14 via the third roller 13 and then it is again wound around the second auxiliary roller 12 via the second roller 11, as illustrated in Fig. 4. And the net wound around the second auxiliary roller 12 is wound around the first roller 10.

At this time, the net 20 which passed through the third roller 13 is passed onto the second roller 11 by the first auxiliary roller 14, while the net 20 which passed through the second roller 11 is passed onto the first roller 10 by the second auxiliary roller 12.

Then, the net can be easily hauled at with a little power by rotating the first roller 10, the second roller 11, and the third roller 13 by actuating the hydraulic motor 5 while tightening the forefront of the net.

In other words, the net 20 is hauled at while contacting the circumferences of the rubber pads 8 installed at the circumferences of the third roller 13 and the second roller 11 at the angle of about 180°, and then the net is hauled at again while contacting the circumferences of the rubber pads installed at circumferences of the second roller 11 and the first roller 10 at the angle of about 180°. Accordingly, not only the contact surface between the net 20 and each of the rollers 10, 11, 13 becomes large but also the friction of the rubber pads installed at each of the rollers 10, 11, 13 and the net becomes larger so that the net is easily hauled at.

Meanwhile, since the net 20 is grazed against the side plate 22 of the third roller 13 while being hauled at, the net is sometimes twisted along the direction of the twist of the ropes fixing the net 20. In order to prevent this twist of the net, the net hauling equipment of the present invention provides a rotating roller 15 installed parallel to the side plate 22 under the third roller 13 so that the net 20 is hauled at through the rotating roller 15 without twisting.

There can be a case that the net is shifted due to the wind so that the net is passed from the third roller 13 directly onto the second roller 11 without passing through the first auxiliary roller 14, or from the second roller 11 directly onto the first roller 10 without passing through the second auxiliary roller 12. The effect of the wind can be minimized by blocking the wind from passing the side plates 22 and the intermediate plate 21.

In addition, an auxiliary frame 16 is installed on the side plate 22 installed outside the third roller 13. The center portion of the auxiliary frame 16 are protruded and supports the drive shaft, and the end of the auxiliary frame 16 has radial ribs which are fixed at the side plate 22. The auxiliary frame 16 has the role of supporting drive shaft, increasing the structural strength of the net hauling equipment, and preventing the net from being caught or jammed in the net hauling equipment when the net is hauled at.

When the work of hauling at the net 20 is completed in this way, the turning flange 2 is turned by controlling the actuator through the lever 7 to the position where the net hauling equipment can be secured inside the fishing vessel 1 so that the net hauling equipment may not be extruded outside the fishing vessel 1, reducing the possibility of accident.

In the above description, the net hauling equipment for fishing vessels according to the present invention includes three rollers comprising the first, second and third roller. However, the net hauling equipment can have two rollers. Also the net hauling equipment can have four or more of rollers by installing another roller and an auxiliary roller outside the third roller. It may readily be understood that this modification is within the scope of the present invention.

### Industrial Applicability

According to the net hauling equipment for fishing vessels of the present invention, the net can be easily hauled at by increasing the contact area between the net and the rollers when the net is hauled at, and the possibility of accident can be reduced because the net hauling equipment is turned onto the position of use only when used.

And, the net is hauled at without being twisted because the net is drawn up in close contact with the rotating rollers, and the net is hauled at much easier because the rubber pads are installed at circumferences of the rollers.

## Claims

1. Net hauling equipment for a fishing vessel comprising:
a turning apparatus which is installed on the bow of a fishing vessel and can turn horizontally;
a drive shaft which is mounted on a frame installed on one end of said turning apparatus and is rotated by a motor;
a plurality of rollers which are formed extending along the axis of said drive shaft and are partitioned by intermediate plates which is fixed on the frame;
a plurality of auxiliary rollers installed slantwise at the lower end of said intermediate plates between the rollers; and
two side plates which are installed on the both end sides of said rollers, with one end fixed on said frame.

2. The net hauling equipment for a fishing vessel of Claim 1, wherein said turning apparatus comprises a fixed flange fixed on the bow of a fishing vessel, and a turning flange which is installed on the upper surface of said fixed flange and can turn horizontally.

3. The net hauling equipment for a fishing vessel of Claim 1, wherein an auxiliary frame supporting said drive shaft is installed on the side plate installed on said roller, and a rotating roller is installed parallel to said side plate on the frame which is extended from said auxiliary frame.

4. The net hauling equipment for a fishing vessel of Claim 3, wherein said auxiliary frame supports the drive shaft at the center of the auxiliary frame, and radial ribs are secured at said side plate extending from center of the auxiliary frame in the radial direction.

5. The net hauling equipment for a fishing vessel of Claims 1, 2, 3 or 4, wherein rod-shaped rubber pad is installed at the circumference of each roller.

## Patentansprüche

1. Netzeinholeinrichtung für ein Fischereifahrzeug, umfassend:
eine drehbare Vorrichtung, die am Bug eines Fischereifahrzeugs montiert ist und sich horizontal drehen kann;
eine Antriebswelle, die an einem Rahmen angebracht ist, der an einem Ende der drehbaren Vorrichtung montiert ist und durch einen Motor in Drehung versetzt wird;
mehrere Rollen, die längs der Achse der Antriebswelle angeordnet sind und durch Zwischenplatten voneinander getrennt sind, die an dem Rahmen befestigt sind;
mehrere Hilfsrollen, die am unteren Ende der Zwischenplatten zwischen den Rollen schräg montiert sind; und
zwei Seitenplatten, die an den beiden Stirnseiten der Rollen montiert sind, wobei ein Ende an dem Rahmen befestigt ist.

2. Netzeinholeinrichtung für ein Fischereifahrzeug nach Anspruch 1, wobei die drehbare Vorrichtung einen feststehenden Flansch umfasst, der am Bug eines Fischereifahrzeugs befestigt ist, und einen drehbaren Flansch, der auf der Oberseite des feststehenden Flansches montiert ist und sich horizontal drehen kann.

3. Netzeinholeinrichtung für ein Fischereifahrzeug nach Anspruch 1, wobei ein die Antriebswelle tragender Hilfsrahmen auf der an der Rolle montierten Seitenplatte montiert ist und eine sich drehende Rolle parallel zu der Seitenplatte an dem Rahmen montiert ist, der sich von dem Hilfsrahmen erstreckt.

4. Netzeinholeinrichtung für ein Fischereifahrzeug nach Anspruch 3, wobei der Hilfsrahmen die Antriebswelle in der Mitte des Hilfsrahmens trägt und radiale Rippen an der sich von der Mitte des Hilfsrahmens erstreckenden Seitenplatte in radialer Richtung befestigt sind.

5. Netzeinholeinrichtung für ein Fischereifahrzeug nach Anspruch 1, 2, 3 oder 4, wobei ein stabförmiges Gummipolster am Umfang jeder Rolle montiert ist.

## Revendications

1. Equipement de remontée de filet pour un bateau de pêche comprenant:
un appareil tournant qui est installé sur la proue d'un bateau de pêche et qui peut tourner horizontalement;
un arbre d'entraînement qui est monté sur un châssis installé sur une extrémité dudit appareil tournant et qui est entraîné en rotation par un moteur;
une pluralité de rouleaux qui sont formés s'étendant le long de l'axe dudit arbre d'entraînement et sont séparés par des plaques intermédiaires, qui sont fixées sur le châssis;
une pluralité de rouleaux auxiliaires installés d'une manière inclinée à l'extrémité inférieure desdites plaques intermédiaires entre les rouleaux; et
deux plaques latérales qui sont installées sur les deux côtés d'extrémité desdits rouleaux, une extrémité étant fixée sur ledit châssis.

2. Equipement de remontée de filet pour un bateau de pêche selon la revendication 1, dans lequel ledit appareil tournant comprend une bride fixe, fixée sur la proue d'un bateau de pêche, et une bride tournante qui est installée sur la surface supérieure de ladite bride fixée et qui peut tourner horizontalement.

3. Equipement de remontée de filet pour un bateau de pêche selon la revendication 1, dans lequel un châssis auxiliaire supportant ledit arbre d'entraînement est installé sur la plaque latérale installée sur ledit rouleau, et un rouleau tournant est installé d'une manière parallèle à ladite plaque latérale sur le châssis, qui s'étend dudit châssis auxiliaire.

4. Equipement de remontée de filet pour un bateau de pêche selon la revendication 3, dans lequel ledit châssis auxiliaire supporte l'arbre d'entraînement au centre du châssis auxiliaire, et des nervures radiales sont fixées à ladite plaque latérale s'étendant du centre du châssis auxiliaire dans la direction radiale.

5. Equipement de remontée de filet pour un bateau de pêche selon les revendications 1, 2, 3 ou 4, dans lequel un coussinet en caoutchouc en forme de tige est installé à la circonférence de chaque rouleau.
